(19) Europäisches Patentamt
European Patent Office
Office européen des brevets

(11) **EP 1 463 232 A1**

(12) **DEMANDE DE BREVET EUROPEEN**

(43) Date de publication:
**29.09.2004 Bulletin 2004/40**

(51) Int Cl.[7]: **H04L 5/02**, H04B 7/08, H04L 1/06

(21) Numéro de dépôt: **04101211.3**

(22) Date de dépôt: **24.03.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL LT LV MK**

(30) Priorité: **25.03.2003 FR 0303644**

(71) Demandeur: **Thales**
**92526 Neuilly Sur Seine (FR)**

(72) Inventeurs:
- **Chenu-Tournier, Marc, THALES Int. Property 94117 Arcueil (FR)**
- **Renoult, Adrien, THALES Int. Property 94117 Arcueil (FR)**

(74) Mandataire: **Dudouit, Isabelle**
**THALES Intellectual Property,**
**31-33 avenue Aristide Briand**
**94117 Arcueil Cedex (FR)**

(54) **Système de transmission multi-porteuses avec plusieurs émetteurs et des décalages de fréquence entre les émetteurs**

(57) Procédé pour augmenter la capacité dans un système de transmission multi-porteuses, comportant plusieurs émetteurs ($E_1$,$E_2$,$E_3$) et au moins un récepteur (R). Pour déterminer le signal reçu sur les récepteurs, on prend en compte l'ensemble des paramètres observés sur l'ensemble des sous-porteuses de la majorité ou de la totalité du ou des récepteurs.

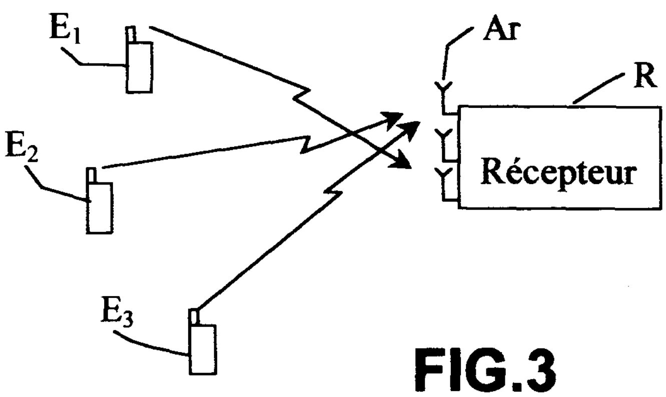


**FIG.3**

EP 1 463 232 A1

## Description

L'invention concerne notamment un procédé pour augmenter la capacité d'un système de transmission utilisant des formes d'ondes parallèles.

Elle s'applique dans tout système dont la modulation est une modulation OFDM ou de type OFDM (MC-CDMA,...).

Les réseaux sans fil 802.11, 802.16 et HyperLAN/2 utilisent des formes d'ondes OFDM (Orthogonal Frequency Division Multiplexing). La figure 1 représente des sous-porteuses d'un modem OFDM classique. Ces modulations envoient simultanément plusieurs symboles sur des sous-porteuses orthogonales et font partie des modems parallèles.

Ces modems OFDM ont l'intérêt de pouvoir se démoduler de façon simple. En général à l'émission, un préfixe cyclique (figure 2) est introduit afin de préserver l'orthogonalité des sous-porteuses à la réception. A la réception, ce préfixe cyclique est retiré du signal, puis une transformée de Fourier est effectuée sur les symboles OFDM. Dans le cas où la longueur du canal est inférieure à la longueur du préfixe cyclique, les symboles peuvent être démodulés sans interférences inter symboles, ni interférences entre les sous porteuses après avoir estimé le canal. D'autres formes de modems parallèles existent, par exemple les formes d'ondes OFDM filtrées et les formes d'ondes MC-CDMA.

Classiquement, dans un contexte d'émissions multiples, on utilise des récepteurs traitant dans une première étape le domaine spatial, un filtrage spatial permettant de séparer les utilisateurs est effectué, puis dans une seconde étape, un traitement mono-émetteurs classique est appliqué. Ces techniques sont connues dans le cas de transmissions CDMA (Code Division Multiple Access).

La figure 3 représente une structure permettant d'accroître le nombre d'émetteurs Ei émettant simultanément et d'augmenter ainsi la capacité du système de transmission. Afin de démoduler correctement les symboles transmis, il est en général nécessaire d'utiliser au moins autant d'antennes de réception Ar que d'antennes de transmission.

Dans le cas où les émetteurs partagent les mêmes systèmes de transmission, par exemple les oscillateurs locaux, l'estimation des symboles émis se fait par exemple en traitant séparément les différentes sous porteuses car l'orthogonalité entre ces dernières est conservée. La figure 4 représente la conservation de l'orthogonalité en contexte multi émissions pour une sous porteuse.

Dans ce cas, il est possible d'estimer les symboles transmis en utilisant des techniques de démodulations conjointes. Sur chaque sous-porteuse n, le signal observé dans le cas des modulations linéaires est exprimé par la relation suivante :

$$y_n = H_n a_n + b_n \qquad (1)$$

Où $\mathbf{H}_n$ est la matrice $\mathbf{N_c x N_u}$ contenant les coefficients du canal de propagation pour la sous porteuse n, où $\mathbf{N}_c$ est le nombre de capteurs et $\mathbf{N}_u$ le nombre d'utilisateurs transmettant simultanément. Le $\mathbf{N_u x1}$ vecteur $\mathbf{a}_n$ contient les $\mathbf{N}_u$ symboles de la sous porteuse n des différents utilisateurs. Enfin le $\mathbf{N_c x1}$ vecteur $\mathbf{b}_n$ contient les échantillons du bruit pour les différents capteurs de réception pour la sous porteuse n.

A partir du modèle des signaux reçus de l'équation (1), plusieurs détecteurs peuvent être utilisés pour estimer les symboles émis. Par exemple, le procédé utilise des détections conjointes fréquentielles telles que la technique MLSE (Maximum Likelihood Sequence Detection), la technique du MMSE (Minimum Mean Square Error), la famille des DFE (Decision Feedback Equalization). Ces récepteurs sont classiquement utilisés pour des transmissions CDMA (Code Division Multiple Access).

Ces techniques, si elles se révèlent performantes ne sont pas adaptées pour des systèmes plus complexes par exemple lorsque les émetteurs ne partagent pas les mêmes oscillateurs. Un décalage de fréquence entre les émetteurs peut alors apparaître et compromettre l'orthogonalité entre les sous-porteuses.

L'invention concerne un procédé pour augmenter la capacité dans un système de transmission utilisant des formes d'ondes parallèles, comportant plusieurs émetteurs et au moins un récepteur, les émetteurs ne partageant pas la même fréquence et un décalage de fréquence entre eux pouvant apparaître. Il est caractérisé en ce qu'il comporte au moins les étapes suivantes :

○ une étape de modélisation du signal y comme suit

○ $$\mathbf{y}=\begin{bmatrix} \mathbf{H}_1^1 & \cdots & \mathbf{H}_{N_{sp}}^1 \\ \vdots & \ddots & \vdots \\ \mathbf{H}_1^{N_{sp}} & \cdots & \mathbf{H}_{N_{sp}}^{N_{sp}} \end{bmatrix}\mathbf{a}+\mathbf{b} \qquad (2)$$

où $\mathbf{H}_i^j$ ($j$ $^{1}$ $i$) est la matrice canal représentant les interférences reçues sur la sous-porteuse j des symboles portés par la sous-porteuse i, et

○ une étape de détection des différents symboles émis par différents émetteurs qui ont des décalages en fréquences.

Le procédé peut comporter un étape d'estimation des écarts en fréquence des différents émetteurs par rapport à la référence du récepteur et une étape où l'on calcule la matrice d'interférence inter sous porteuse et inter utilisateurs.

L'invention concerne aussi un dispositif pour augmenter la capacité d'un système de transmission utilisant des formes d'ondes parallèles, le dispositif comportant plusieurs émetteurs et au moins un récepteur, les émetteurs ne partageant pas la même fréquence et un décalage de fréquence entre eux pouvant apparaître. Il est caractérisé en ce que le récepteur est adapté:

○ à déterminer le signal y exprimé sous la forme

$$\mathbf{y}=\begin{bmatrix} \mathbf{H}_1^1 & \cdots & \mathbf{H}_{N_{sp}}^1 \\ \vdots & \ddots & \vdots \\ \mathbf{H}_1^{N_{sp}} & \cdots & \mathbf{H}_{N_{sp}}^{N_{sp}} \end{bmatrix}\mathbf{a}+\mathbf{b} \qquad (2)$$

où $\mathbf{H}_i^j$ ($j$ $^{1}$ $i$) est la matrice canal représentant les interférences reçues sur la sous-porteuse j des symboles portés par la sous-porteuse i, et

○ à détecter les différents symboles émis par différents émetteurs qui ont des décalages en fréquences.

L'invention présente notamment les avantages suivants

- Les symboles transmis sont estimés conjointement sur une partie ou sur la totalité des sous-porteuses,
- Le procédé prend en compte les pertes d'orthogonalité des sous-porteuses qui peuvent être dues à des décalages de fréquences entre les émetteurs et/ou des non linéarités d'amplifications,
- La possibilité d'accroître le nombre d'émetteurs dans un système utilisant des modems en parallèle augmentant ainsi la capacité de ces systèmes,
- L'utilisation de modulation non circulaires pour un système OFDM avec décalage en fréquence des émetteurs, afin d'améliorer la réjection et/ou la détection des symboles émis par les différents utilisateurs,
- La possibilité d'effectuer la détection multi-utilisateurs sur un système multi-porteuses lorsqu'un décalage fréquentiel existe entre les différents émetteurs. Dans ce cas, le procédé propose d'estimer les symboles sur les sous-porteuses en utilisant des techniques linéaires du type MMSE ou des techniques non linéaires du type DFE-MMSE en partant des bords du spectre et en se servant des pilotes comme de mini-probes. En effet, les techniques DFE supposent que les symboles déjà détectés l'ont été correctement. En se servant des fréquences extrêmes et des pilotes pour initialiser le détecteur, ceci permet de limiter les problèmes de propagation d'erreurs intrinsèques aux techniques DFE.
- En fonctionnement normal aucun code d'étalement n'est utilisé et les utilisateurs ne sont séparés que grâce aux canaux de propagations.

D'autres caractéristiques et avantages de l'invention apparaîtront mieux à la lecture de la description qui suit donnée à titre illustratif et nullement limitatif et annexée des figures qui représentent :

- La figure 1 une représentation des sous-porteuses d'un modem OFDM classique,
- La figure 2 un exemple de préfixe cyclique introduit avant les symboles,
- La figure 3 un exemple de scénario multi-émetteurs,
- La figure 4 un exemple pour une sous-porteuse de la conservation de l'orthogonalité en contexte multi-émission,
- La figure 5 la représentation de la réponse en fréquence de la TFD pour une sinusoïde, et
- La figure 6 un exemple d'améliorations de performances apportées par l'invention.

L'idée utilisée dans le procédé selon l'invention consiste notamment à prendre en compte l'ensemble des paramètres observés sur l'ensemble des sous-porteuses de tous les récepteurs pour définir une matrice du canal de propagation.

Afin de mieux faire comprendre l'objet de l'invention, l'exemple qui suit, donné à titre illustratif et nullement limitatif, concerne un système de transmission comportant plusieurs émetteurs qui ne partagent pas la même horloge locale et un récepteur adapté à exécuter les différentes étapes du procédé. Les signaux échangés sont modulés OFDM, les sources ou émetteurs pouvant être désynchronisées en fréquence.

Dans ce contexte, en plus de l'interférence entre les différents utilisateurs, il faut combattre l'interférence entre les sous-porteuses. Le modèle du signal reçu au niveau du récepteur prend la forme suivante

$$\mathbf{y}=\begin{bmatrix} \mathbf{H}_1^1 & \cdots & \mathbf{H}_{N_{sp}}^1 \\ \vdots & \ddots & \vdots \\ \mathbf{H}_1^{N_{sp}} & \cdots & \mathbf{H}_{N_{sp}}^{N_{sp}} \end{bmatrix}\mathbf{a}+\mathbf{b} \qquad (2)$$

avec $\mathbf{H}_i^j$ ($j$ ¹ $i$) qui est la matrice canal représentant les interférences reçues sur la sous-porteuse j des symboles portés par la sous-porteuse i. Le $\mathbf{N_u N_{Sp} x1}$ vecteur **a** rassemble l'ensemble des symboles transmis par les différents émetteurs sur toutes les sous-porteuses. **b** est un vecteur représentatif du bruit.

Il est possible, pour la détection, de se limiter à un sous-ensemble des sous-porteuses et d'appliquer les techniques précitées pour détecter les symboles transmis.

La matrice canal peut être estimée de diverses façons dépendant des informations connues sur le signal transmis. Si par exemple, les différents émetteurs transmettent simultanément des séquences connues, (différentes de préférence), le récepteur peut à la fois se synchroniser et estimer le canal en utilisant un procédé similaire à celui décrit dans la demande de brevet FR 2 820 580.

Les techniques d'estimation des symboles peuvent ensuite être mises en oeuvre pour détecter les symboles transmis. Pour cela on estime les écarts en fréquence des différents émetteurs par rapport à la référence du récepteur et on calcule la matrice d'interférence inter-sous-porteuse et inter-utilisateurs.

Une simplification de la technique de la démodulation est utilisée par exemple en estimant les symboles transmis via un DFE (Decision Feed-Back Equalizer), ou des techniques d'annulations d'interférences en commençant l'estimation de bord du spectre ou/ et des sous-porteuses pilotes. Ainsi, lorsque l'on commence l'estimation depuis les symboles connus, la propagation des erreurs par le DFE est limitée. De la même façon, en commençant l'estimation depuis le bord du spectre, correspondant aux sous-porteuses extrêmes, les symboles au delà de ces bords peuvent être considérés comme des symboles nuls et donc par la même limitent la propagation des erreurs.

Dans ce type de configuration où un décalage fréquentiel existe entre les différents émetteurs, l'utilisation de modulations non circulaires, telles que CPM (modulation de fréquence à phase continue), BPSK (Biphase shift keying), etc. permet d'exploiter le second moment sur les symboles. Le modèle du signal reste le même, mais il est ainsi possible d'exploiter ce second moment qui représente la corrélation entre symboles et les symboles. (Le premier moment est la corrélation entre les symboles et les symboles conjugués). Ainsi, la séparation des différents émetteurs ayant des décalages en fréquence est plus aisée grâce au filtrage cyclique multi-utilisateurs.

Selon une variante de mise en oeuvre du procédé selon l'invention permettant notamment de garantir une bonne estimation des symboles transmis, il est possible d'estimer les canaux de propagation en mettant en oeuvre les étapes décrites dans la demande de brevet FR 2 820 580. Les étapes sont adaptées pour estimer conjointement l'instant de synchronisation, la réponse impulsionelle des canaux de propagation pour chaque émetteur et pour chaque capteur de réception, et le décalage fréquentiel. L'instant de synchronisation s'estime en minimisant la puissance du bruit, le canal s'estime ensuite au sens des moindres carrés et les fréquences de façon paramétrique.

Les différentes variantes de mise en oeuvre de l'invention sont par exemple exécutées par un processeur

disposé au niveau du récepteur

Sur la figure 5 la réponse en fréquence de la TFD (transformée de fourrier discrète) pour une sinusoïde est présentée. L'axe des abscisses représente le décalage fréquentiel et l'axe des ordonnées représente le module de la réponse. Un décalage de 1 représente un décalage d'une sous-porteuse. On remarque que lorsqu'il y a un décalage en fréquence non seulement il y a une perte d'amplitude sur la sous-porteuse d'intérêt mais également on crée de l'interférence sur les autres sous porteuses.

L'amélioration des performances par la mise en oeuvre du procédé selon l'invention sont illustrées sur la figure 6. Sur cette figure 6, les performances du système sont proposées dans le cas de la compensation sur une unique sous porteuse, et sur 5 sous-porteuses (la porteuse d'intérêt et deux sous-porteuses de part et d'autres de la porteuse d'intérêt). Dans ces deux cas les performances sont celles obtenues avec un récepteur MMSE.

## Revendications

1. Procédé pour augmenter la capacité dans un système de transmission utilisant des formes d'ondes parallèles, comportant plusieurs émetteurs et au moins un récepteur, les émetteurs ne partageant pas la même fréquence et un décalage de fréquence entre eux pouvant apparaître, **caractérisé en ce qu'**il comporte au moins les étapes suivantes :

   ○ une étape de modélisation du signal y comme suit

   ○ $$\mathbf{y}=\begin{bmatrix} \mathbf{H}_1^1 & \cdots & \mathbf{H}_{N_{sp}}^1 \\ \vdots & \ddots & \vdots \\ \mathbf{H}_1^{N_{sp}} & \cdots & \mathbf{H}_{N_{sp}}^{N_{sp}} \end{bmatrix}\mathbf{a}+\mathbf{b} \qquad (2)$$

   où $\mathbf{H}_i^j$ ($j$ $^1$ $i$) est la matrice canal représentant les interférences reçues sur la sous-porteuse j des symboles portés par la sous-porteuse i, et

   ○ une étape de détection des différents symboles émis par différents émetteurs qui ont des décalages en fréquences.

2. Procédé selon la revendication 1 **caractérisé en ce qu'**il comporte une étape d'estimation des écarts en fréquence des différents émetteurs par rapport à la référence du récepteur et une étape où l'on calcule la matrice d'interférence inter sous porteuse et inter utilisateurs.

3. Procédé selon l'une des revendications 1 ou 2 **caractérisé en ce que** les formes d'onde sont des modulations non circulaires, telles que CPM ou BPSK.

4. Dispositif pour augmenter la capacité d'un système de transmission utilisant des formes d'ondes parallèles, le dispositif comportant plusieurs émetteurs et au moins un récepteur, les émetteurs ne partageant pas la même fréquence et un décalage de fréquence entre eux pouvant apparaître, **caractérisé en ce que** le récepteur est adapté:

   ○ à déterminer le signal y exprimé sous la forme

   $$\mathbf{y}=\begin{bmatrix} \mathbf{H}_1^1 & \cdots & \mathbf{H}_{N_{sp}}^1 \\ \vdots & \ddots & \vdots \\ \mathbf{H}_1^{N_{sp}} & \cdots & \mathbf{H}_{N_{sp}}^{N_{sp}} \end{bmatrix}\mathbf{a}+\mathbf{b} \qquad (2)$$

où $\mathbf{H}_i^j$ ($j$ 1 $i$) est la matrice canal représentant les interférences reçues sur la sous-porteuse j des symboles portés par la sous-porteuse i, et

- ○ à détecter les différents symboles émis par différents émetteurs qui ont des décalages en fréquences.

**5.** Dispositif selon la revendication 4 **caractérisé en ce que** les formes d'ondes sont des modulations non circulaires, telles que CPM ou BPSK.

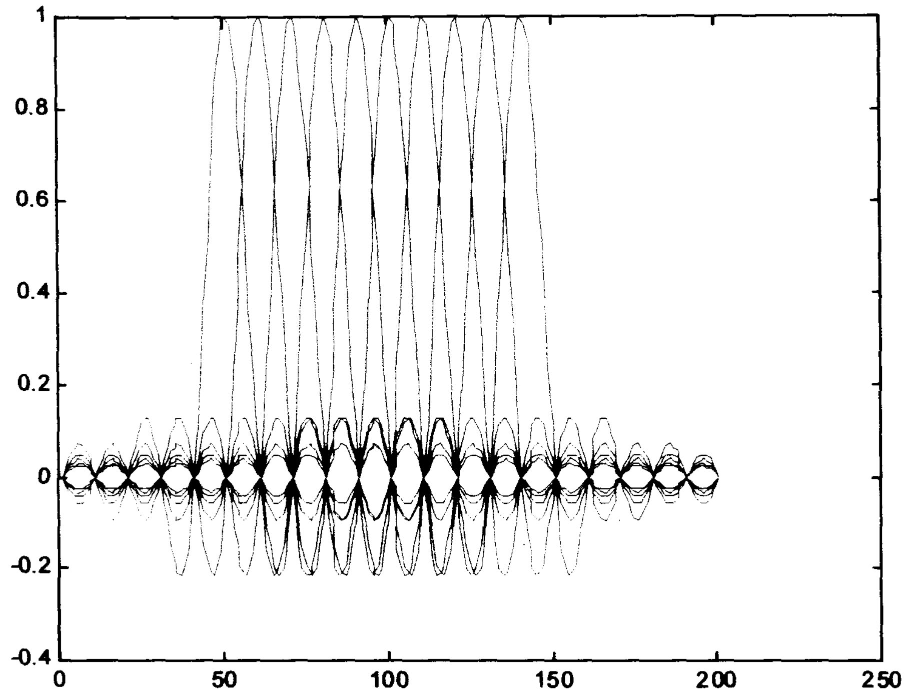


FIG.1

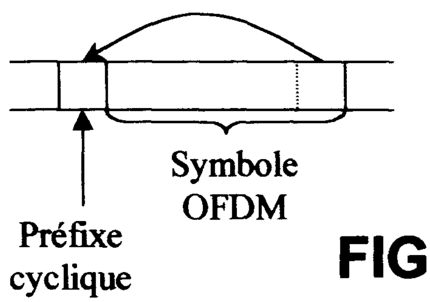


FIG.2

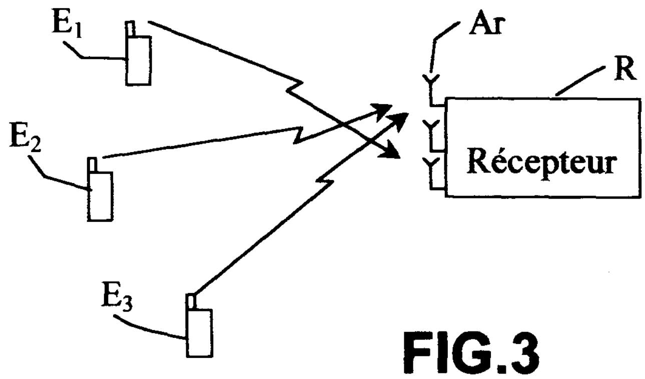


FIG.3

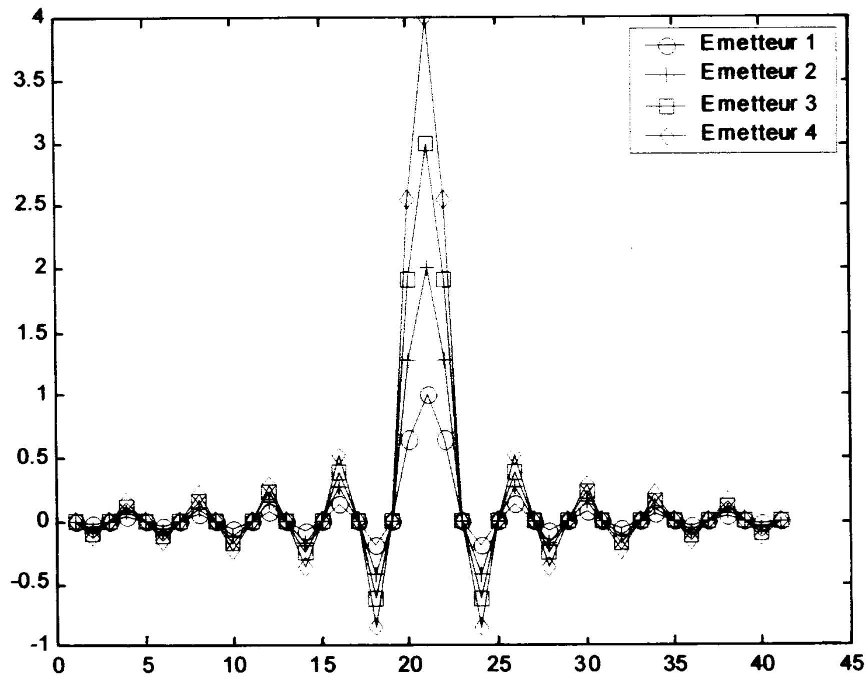

Emetteur 1
Emetteur 2
Emetteur 3
Emetteur 4
4
3.5
3
2.5
2
1.5
1
0.5
0
-0.5
-1
0
5
10
15
20
25
30
35
40
45


**FIG.4**

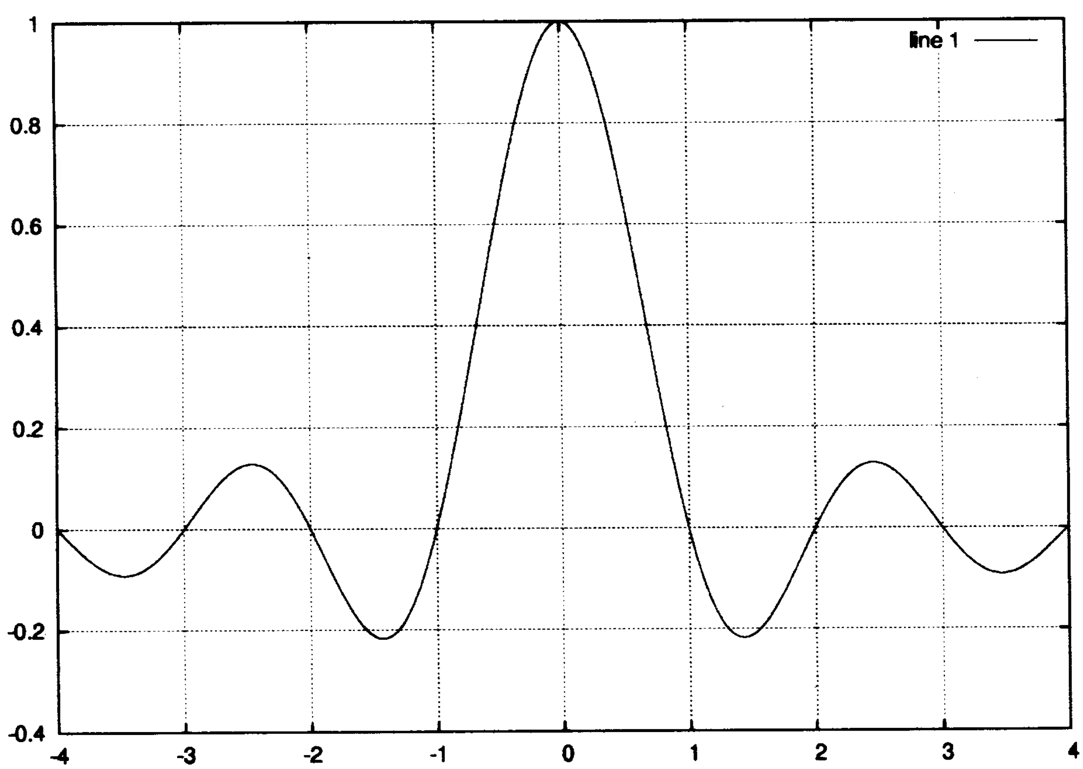

line 1
1
0.8
0.6
0.4
0.2
0
-0.2
-0.4
-4
-3
-2
-1
0
1
2
3
4


**FIG.5**

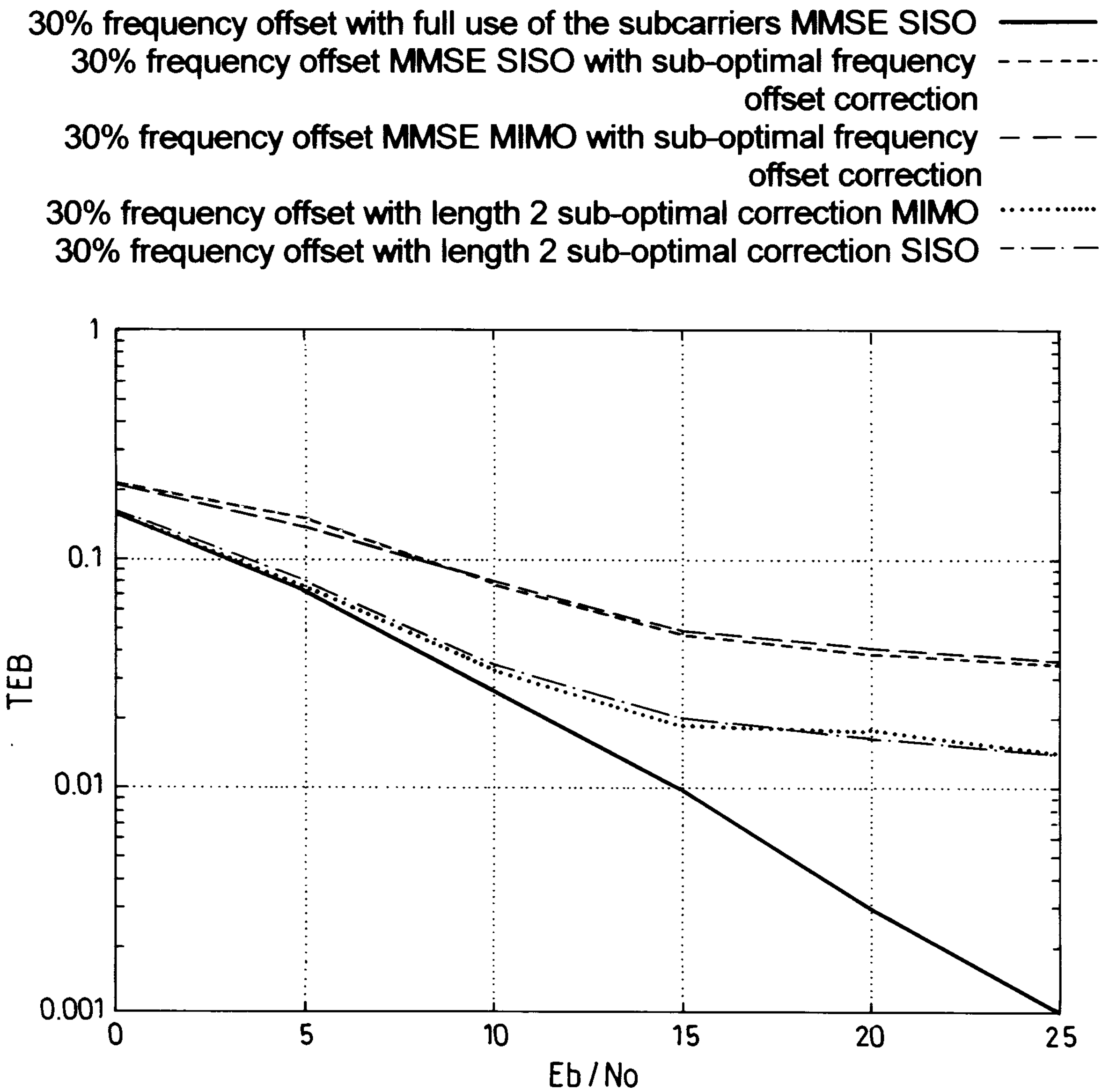
30% frequency offset with full use of the subcarriers MMSE SISO
30% frequency offset MMSE SISO with sub-optimal frequency offset correction
30% frequency offset MMSE MIMO with sub-optimal frequency offset correction
30% frequency offset with length 2 sub-optimal correction MIMO
30% frequency offset with length 2 sub-optimal correction SISO
1
0.1
0.01
0.001
TEB
0
5
10
15
20
25
Eb / No

FIG.6

Office européen des brevets

# RAPPORT DE RECHERCHE EUROPEENNE

Numéro de la demande
EP 04 10 1211

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DIGGAVI S ET AL: "INTERCARRIER INTERFERENCE IN MIMO OFDM" ICC 2002. 2002 IEEE INTERNATIONAL CONFERENCE ON COMMUNICATIONS, NEW YORK, NY, vol. 1 OF 5, 28 avril 2002 (2002-04-28) - 2 mai 2002 (2002-05-02), pages 485-489, XP010589542 NEW YORK, NY, US ISBN: 0-7803-7400-2 | 1,3-5 | H04L5/02<br>H04B7/08<br>H04L1/06 |
| Y | * page 485, colonne de gauche, ligne 10 - page 486, colonne de droite, ligne 20 *<br>* page 487, colonne de droite, ligne 16 - ligne 29 *<br>--- | 2 | |
| Y | US 2002/122381 A1 (WU S ET AL) 5 septembre 2002 (2002-09-05) | 2 | |
| A | * alinéa [0007] *<br>* alinéa [0011] *<br>* alinéa [0032] *<br>* alinéa [0038] *<br>* page 4, colonne de gauche, ligne 7 - ligne 12 *<br>* alinéa [0057] - alinéa [0061] *<br>* figures 2,3,6 *<br>--- | 1,4 | DOMAINES TECHNIQUES RECHERCHES (Int.Cl.7)<br>H04L<br>H04B |

-/--

Le présent rapport a été établi pour toutes les revendications

| Lieu de la recherche | Date d'achèvement de la recherche | Examinateur |
|---|---|---|
| LA HAYE | 3 mai 2004 | Marselli, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande
EP 04 10 1211

| Catégorie | Citation du document avec indication, en cas de besoin, des parties pertinentes | Revendication concernée | CLASSEMENT DE LA DEMANDE (Int.Cl.7) |
|---|---|---|---|
| | **DOCUMENTS CONSIDERES COMME PERTINENTS** | | |
| A | TIAN Q ET AL: "THE PERFORMANCE OF MULTI-CARRIER CDMA WITH BASE STATION ANTENNA ARRAYS IN FADING CHANNELS" VTC 2000-SPRING. 2000 IEEE 51ST. VEHICULAR TECHNOLOGY CONFERENCE PROCEEDINGS, TOKYO, JAPAN, vol. 2 OF 3. CONF. 51, 15 - 18 mai 2000, pages 1498-1502, XP000968120 NEW YORK, NY, US ISBN: 0-7803-5719-1 * page 1498, colonne de droite, ligne 29 - page 1500, colonne de gauche, ligne 17 * * figure 1 * --- | 1-5 | |
| D,A | FR 2 828 615 A (THALES) 14 février 2003 (2003-02-14) * page 1, ligne 4 - ligne 14 * * page 2, ligne 28 - page 3, ligne 4 * * page 4, ligne 21 - page 5, ligne 8 * * page 5, ligne 26 - page 6, ligne 2 * * page 10, ligne 24 - page 11, ligne 19 * * page 12, ligne 1 - page 15, dernière ligne * * figures 1,5 * --- | 1-5 | DOMAINES TECHNIQUES RECHERCHES (Int.Cl.7) |
| A | US 2002/031189 A1 (HIBEN B M ET AL) 14 mars 2002 (2002-03-14) * alinéa [0022] * * figure 1 * ----- | 1,3-5 | |

Le présent rapport a été établi pour toutes les revendications

| Lieu de la recherche | Date d'achèvement de la recherche | Examinateur |
|---|---|---|
| LA HAYE | 3 mai 2004 | Marselli, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 04 10 1211

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-05-2004

| Document brevet cité au rapport de recherche | | Date de publication | Membre(s) de la famille de brevet(s) | | | Date de publication |
|---|---|---|---|---|---|---|
| US 2002122381 | A1 | 05-09-2002 | CA | 2351140 | A1 | 01-03-2002 |
| | | | CA | 2355433 | A1 | 01-03-2002 |
| | | | EP | 1185001 | A2 | 06-03-2002 |
| | | | EP | 1185048 | A2 | 06-03-2002 |
| | | | US | 2002122383 | A1 | 05-09-2002 |
| | | | US | 2002122382 | A1 | 05-09-2002 |
| | | | US | 2002041635 | A1 | 11-04-2002 |
| FR 2828615 | A | 14-02-2003 | FR | 2828615 | A1 | 14-02-2003 |
| | | | CA | 2398622 | A1 | 10-02-2003 |
| | | | EP | 1283605 | A1 | 12-02-2003 |
| | | | US | 2003128770 | A1 | 10-07-2003 |
| US 2002031189 | A1 | 14-03-2002 | US | 6424678 | B1 | 23-07-2002 |
| | | | GB | 2385247 | A | 13-08-2003 |
| | | | WO | 02058305 | A2 | 25-07-2002 |
| | | | AU | 7172601 | A | 13-02-2002 |
| | | | CA | 2412387 | A1 | 07-02-2002 |
| | | | CN | 1443407 | T | 17-09-2003 |
| | | | EP | 1307991 | A2 | 07-05-2003 |
| | | | WO | 0211331 | A2 | 07-02-2002 |

EPO FORM P0460

Pour tout renseignement concernant cette annexe : voir Journal Officiel de l'Office européen des brevets, No.12/82